# EUROPEAN PATENT APPLICATION

(11) **EP 2 735 968 A2**
(43) Date of publication of application: **28.05.2014**
(21) Application number: 13185931.6
(22) Date of filing: 25.09.2013
(51) Int. Cl.: G06F 9/52

(54) **Parallel computer and control method thereof**

(30) Priority: 27.11.2012 JP 2012258186
(71) Applicant: FUJITSU LIMITED, Kawasaki-shi Kanagawa 211-8588 (JP)
(72) Inventor: Ihara, Nobutaka, Kawasaki-shi Kanagawa 211-8588 (JP)
(74) Representative: Keltsch, Ulrike

(57) **Abstract**

A disclosed parallel computer includes plural nodes, and one node of the plural nodes collects information concerning a state of progress of barrier synchronization from each of the plural nodes, upon detecting that execution of a program for a job is stopped in each of the plural of nodes. And, the one node of the plural nodes in the parallel computer determines a restart position of the program for the job in the one node, based on a stop position of the program for the job in the one node and the information collected from each of the plural nodes.

## Description

This invention relates to a technique for controlling a parallel computer.

Barrier synchronization is known as a method for synchronizing the processing executed by plural computation nodes in a parallel computer. Here, a computation node is a portion in a parallel computer, which executes a computational processing, and includes a CPU (Central Processing Unit) as a processor, or processor cores as processing units. The barrier synchronization is made possible by calling, by each computation node, a barrier function at a predetermined position within a program for a job. For example, in case of using a Message Passing Interface (MPI) library, it is possible to achieve the barrier synchronization by calling the MPI_Barrier function in a program for a job. Each of the computation nodes is unable to advance execution of the program for the job until all of the computation nodes in the parallel computer confirm that the barrier synchronization is complete.

A following technique is known for execution of the program for the job in a parallel computer. More specifically, in a parallel computer, synchronization for re-execution of the program is performed based on the access history for a shared memory. After that, the program is executed again from a checkpoint with the shared memory and processor state information, which were reproduced based on recorded information.

However, no technique is established in which a job is temporarily stopped and then is restarted later, in a parallel computer for which the barrier synchronization is being performed. When the job was stopped during execution of the barrier synchronization, there is a possibility that the barrier synchronization will not be suitably performed after the job is restarted, accordingly, advancement of the job will stop. Therefore, when there is an instruction from a user to stop the job during execution of the barrier synchronization, there is a problem inwhich the job cannot be stopped immediately, and stopping the job will be put on hold until the barrier synchronization is completed.

As one aspect, an object of this invention is to provide a technique for enabling restart of a job that was stopped during execution of the barrier synchronization.

A control method relating to this invention is executed by a first node among plural nodes included in a parallel computer. Then, the control method includes: (A) upon detecting that execution of a program for a job is stopped in each of the plural nodes, collecting information concerning a state of progress of barrier synchronization from each of the plural nodes; and (B) first determining a restart position of the program for the job in the first node, based on a stop position of the program for the job in the first node and the information collected from each of the plural nodes.

Reference will now be made, by way of example, to the accompanying Drawings, in which:
FIG. 1 is a diagram depicting an example of progress of barrier synchronization;
FIG. 2 is a diagram depicting an outline of a system in this embodiment;
FIG. 3 is a diagram to explain a program executed in a computation node;
FIG. 4 is a diagram depicting a processing flow of a processing for determining a restart position of a program for a job;
FIG. 5 is a diagram depicting an example of data stored in a data storage unit;
FIG. 6 is a diagram depicting an example of data stored in the data storage unit;
FIG. 7 is a diagram to explain functions invoked within MPI_Barrier function;
FIG. 8 is a diagram to explain determination of the restart position;
FIG. 9 is a diagram depicting the processing flow of a processing for determining the restart position of the program for the job;
FIG. 10 is a diagram to explain the determination of the restart;
FIG. 11 is a diagram to explain a relationship between a stop position and the restart position of the program for the job;
FIG. 12 is a diagram to explain the relationship between the stop position and the restart position of the program for the job;
FIG. 13 is a diagram to explain the relationship between the stop position and the restart position of the program for the job;
FIG. 14 is a diagram to explain the relationship between the stop position and the restart position of the program for the job;
FIG. 15 is a diagram to explain the relationship between the stop position and the restart position of the program for the job; and
FIG. 16 is a diagram to explain the relationship between the stop position and the restart position of the program for the job.

In communication in a parallel computer, there is point-to-point data communication (here, this includes collective communication), and one-to-many communication that is used when performing the barrier synchronization. In the point-to-point data communication, the communication library, such as a MPI library, can confirm whether or not the other party received the transmitted data. Therefore, by performing a processing to stop a job after confirming that the other party received the data and setting that stop position as the restart position, communication is performed after restarting the job with no problem. On the other hand, when executing the barrier synchronization in one-to-many communication, the communication library is able to confirm the starting and ending of the barrier synchronization, however, the communication library is not able to confirm how far barrier synchronization has progressed (in other words, the process of barrier synchronization in progress).

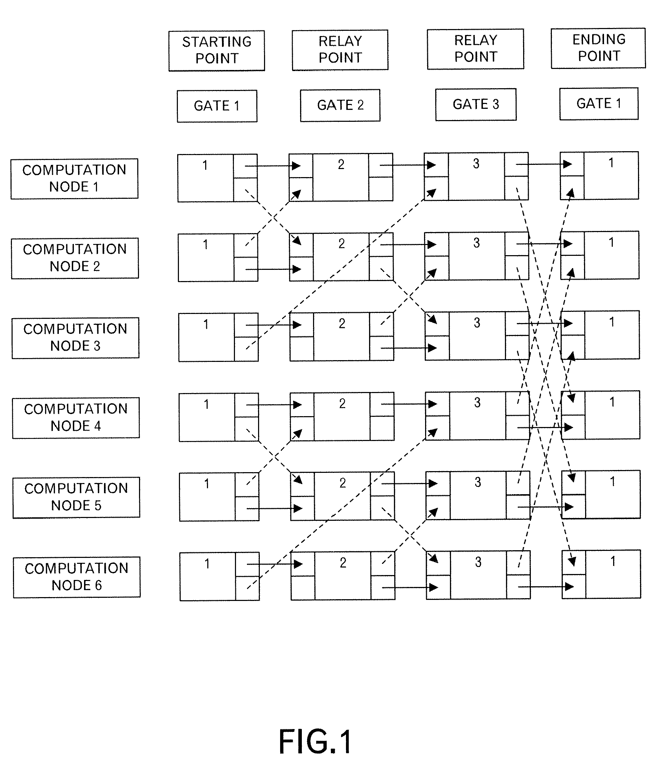

In order to explain this in more detail, FIG. 1 illustrates an example of the progression of the barrier synchronization. The example in FIG. 1 is an example in which six computation nodes cause the barrier synchronization to proceed in a special network for the barrier synchronization (hereafter called "a barrier network"). Here, a computation node is a portion of a parallel computer, which executes a computational process, and includes the CPU as a processor or processor cores as processing units. Each computation node has a barrier interface that includes hardware and firmware. The barrier interface has plural mechanisms for receiving, transmitting and waiting for synchronization data. Here, that mechanism is called "a gate". There are gates that are starting points, gates that are ending points and gates that are relay points. Each gate waits for the reception of the synchronization data from the gate at its own computation node (solid arrow line in FIG.1) and for the reception of synchronization data from the gate of another computation node, (dotted arrow line in FIG.1) and after confirming the reception of the synchronization data, each gate transmits that synchronization data to the next gate. At each computation node, the starting gate (i.e. gate 1) transmits synchronization data, the relay gates (i.e. gate 2 and gate 3) relay the synchronization data, and the ending gate (i.e. gate 1, which is the same gate as the starting gate) confirms whether or not the barrier synchronization is complete. The communication library sets, for each gate, information concerning gates (for example, computation node number and gate number) that will be receiving party and transmitting party. The communication library is able to confirm the states of the barrier synchronization at the starting gate and ending gate, however, is not able to confirm the states of the barrier synchronization at the relay gates (e.g. gate 2 and gate 3 in FIG. 1).

Here, the case in which there is an instruction from the user to stop a job will be considered. When there was an instruction to stop a job and the computation nodes 1 to 6 have completed transmission of synchronization data from gate 1, the barrier synchronization at the computation nodes 1 to 6 is complete. However, when there is a computation node that has not finished transmitting synchronization data, one of the relay gates waits for the reception of the synchronization data from the computation node that has not finished transmitting the synchronization data, and synchronization data does not reach the ending gate. At this time, the communication library is not able to confirm the states of the barrier synchronization at the relay gates of the respective computation nodes. Therefore, it is not possible to know at which relay gate the barrier synchronization is stopped. Therefore, the communication library does not know from which position to restart the program of the job in order for the barrier synchronization to be suitably performed.

Therefore, in the following, a method for determining a restart position of the program for the job so that the barrier synchronization will be suitably performed after restarting the job will be explained for the case of temporarily stopping the job during execution of the barrier synchronization and restarting the job later.

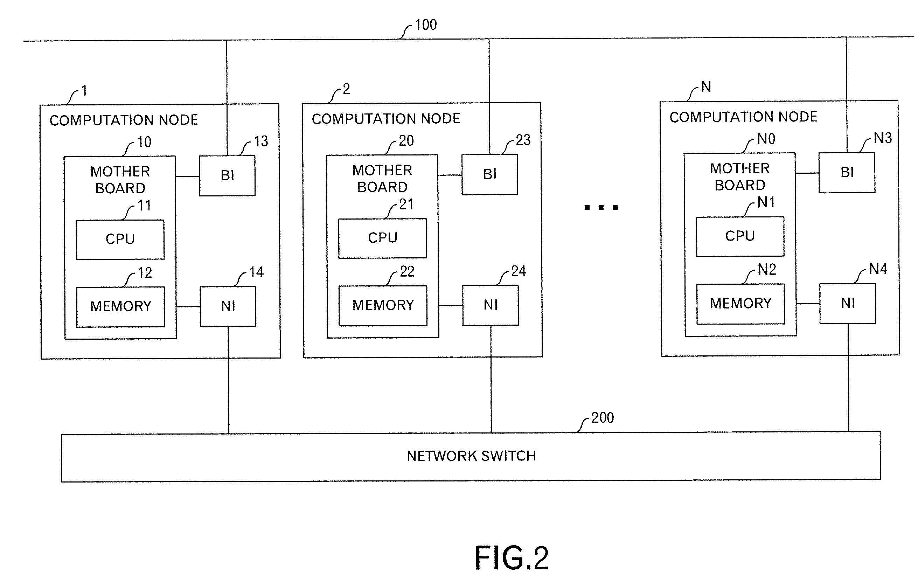

FIG. 2 illustrates a system in this embodiment. The system in this embodiment includes computation nodes 1 to N (N is a natural number that is equal to or greater than 2). The system illustrated in FIG. 2 is a Single Program, Multiple Data (SPMD) parallel computer that does not share a memory, and executes jobs in parallel while synchronizing the computer nodes with the barrier synchronization. However, the system is not limited to the SPMDparallel computer.

Each of the computation nodes 1 to N has a motherboard N0 on which a CPU N1 and memory N2 are mounted. A network interface (abbreviated as NI in FIG. 2) N4, which is an expansion card such as a Local Area Network (LAN) card, and a barrier interface (abbreviated as BI in FIG. 2) N3 are connected to the motherboard N0.

Each of the network interfaces N4 is connected to a network switch 200, which is, for example, a layer-2 switch. Each computation node performs point-to-point communication with other computation nodes by receiving and transmitting data by way of the network interface N4. The network switch 200 relays communication data between the network interfaces of the computation nodes.

Each of the barrier interfaces N3 is connected with other barrier interfaces by way of the barrier network 100. The computation nodes 1 to N belong to the same barrier group, and as illustrated in FIG. 1, the barrier synchronization proceeds by receiving and transmitting, by each computation node, synchronization data. Communication for performing the barrier synchronization is one-to-many communication and is performed independently of communication that is performed by way of the network interface N4.

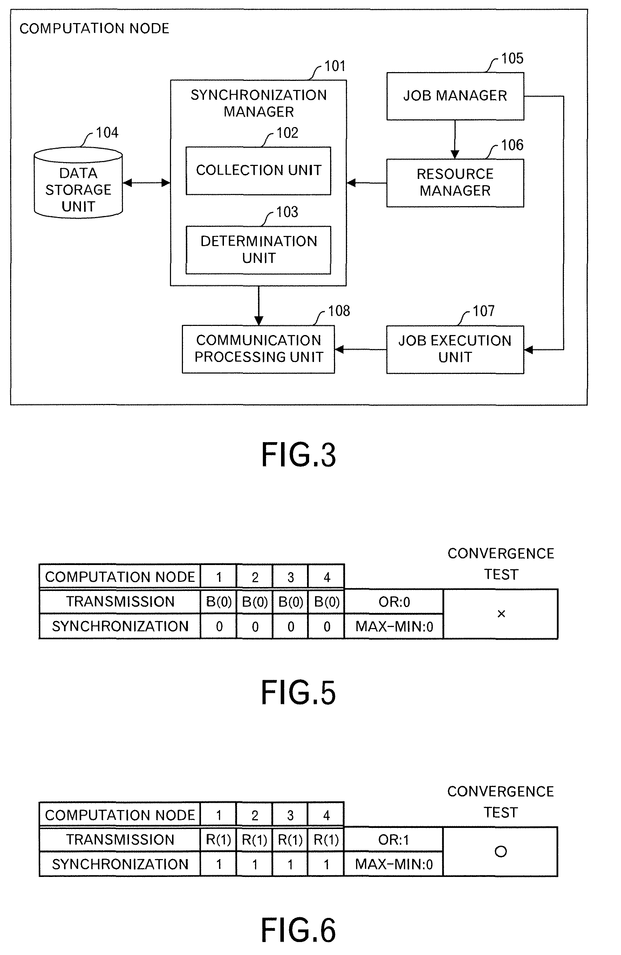

A program that is executed at the computation nodes 1 to N will be explained using FIG. 3. Here, the computation node 1 will be explained as an example, however, the computation nodes 2 to N are the same. In the computation node 1, a synchronization manager 101 that includes a collection unit 102 and a determination unit 103, a j ob manager 105, a resource manager 106, a job execution unit 107 and a communication processing unit 108 are executed by the CPU 11. An area for a data storage unit 104 is secured in the memory 12.

The collection unit 102 collects, from other computation nodes, information about the state of progress of the barrier synchronization, and stores the collected information in the data storage unit 104. The determination unit 103 uses the data that is stored in the data storage unit 104 to execute a processing for determining a restart position of the program for the job. The job manager 105 receives a stop instruction from the user to stop execution of the program for the job, and outputs a swap-out request to the resource manager 106. The job manager 105 also controls the job execution unit 107. When the resource manager 106 receives the swap-out request, the resource manager 106 activates the synchronization manager 101. The resource manager 106 executes a processing for releasing resources in the barrier interface 13, network interface 14 and the like. The communication processing unit 108 is a communication library such as a MPI library, and executes a processing relating to communication.

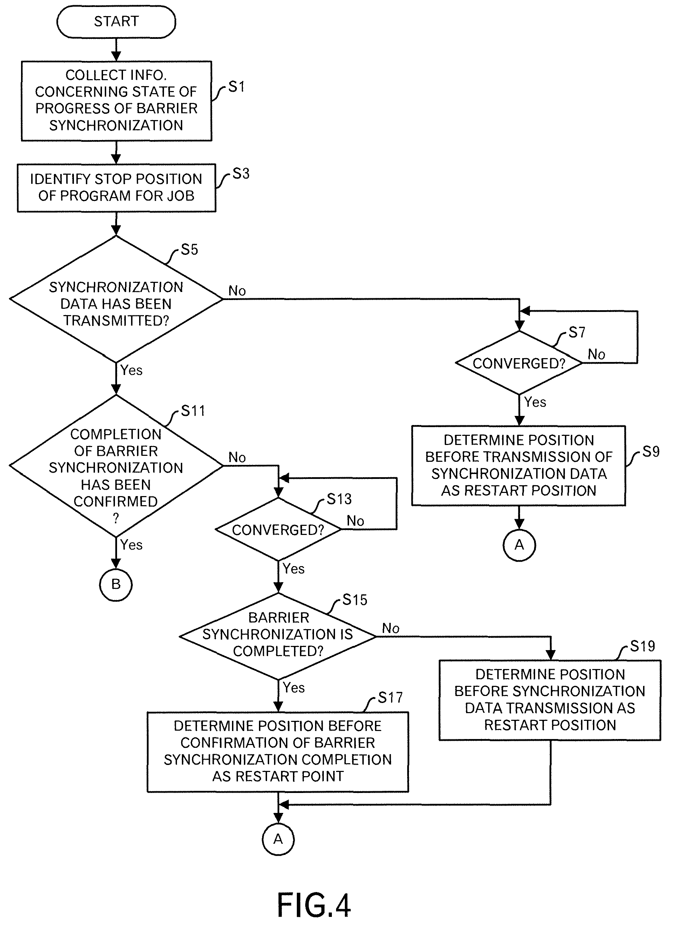

Next, an operation of the system illustrated in FIG. 2 will be explained using FIG. 4 to FIG. 16. Here, an example will be explained in which a user gives an instruction to the computation node 1 to stop a program for a job (in the following, this will be called "the first job"), and execute a program for a job (in the following, this will be called "the second job") having a higher priority than the first job.

After receiving a stop instruction to stop execution of the program for the first job, the job manager 105 requests the job execution unit 107 to stop the first job. In response to this request, the job execution unit 107 stops the processing. The job manager 105 then stores information representing a stop position where the program for the first job was stopped, in the memory 12.

The job manger 105 outputs a swap-out request of the first job to the resource manager 106. The resource manager 106 transmits a swap-out request to the computation node 2 to computation node N, that are remaining computation nodes. The resource manager 106 in each of the computation nodes 1 to N invokes the synchronization manager 101 as a thread for executing the processing in this embodiment.

When the computation node 1 is performing communication with another computation node, the synchronization manager 101 causes the communication processing unit 108 to stop the communication. For example, the communication processing unit 108 stops the transmission of communication data by the network interface 14, and stops the transmission of synchronization data for performing the barrier synchronization. In addition, the synchronization manager 101 saves (in other words, swaps out) the information to be saved, which is stored in the memory of the network interface 14, in a storage device such as a hard disk. After performing the aforementioned processing, the synchronization manager 101 outputs a command to the communication processing unit 108 to enable communication between computation nodes. As a result, the resources of the network interface 14 can be used for communication.

Resources of the barrier interface 13 and the resources of the network interface 14 are independent, so as will be explained below, it is possible to use the resources of the network interface 14 in order to confirm the state of progress of the barrier synchronization.

The synchronization manager 101 then executes a processing to set the restart position in the program for the first job. This processing will be explained using FIG. 4 to FIG. 16.

First, the collection unit 102 in the synchronization manager 101 collects, from the computation nodes 2 to N, information concerning the state of progress of the barrier synchronization by performing communication by way of the network interface 14 (FIG. 4: step S1). More specifically, the collection unit 102 collects information concerning the state of progress of the barrier synchronization, which is stored in a predetermined memory area in the computation nodes 2 to N. The collection unit 102 acquires information concerning the state of progress of the barrier synchronization for its own computation node (here, the computation node 1) from a storage device such as a memory in the barrier interface 13.

The information concerning the state of progress of the barrier synchronization includes information that represents whether or not synchronization data for performing the barrier synchronization has been transmitted, and a sequence number that represents the state of completion of the barrier synchronization. Information that represents whether or not synchronization data has been transmitted is either "R(1)" or "B(0)". R(1) represents that the synchronization data has not yet been transmitted, and B(0) represents that synchronization data has been transmitted and it is in a waiting state for the completion of the barrier synchronization. The sequence number that represents the state of completion of the barrier synchronization is incremented by "1" each time the barrier synchronization is completed. The initial value is "0". These kinds of information are updated by a firmware or the like in the barrier interface.

The collection unit 102 stores the information concerning the state of progress of the barrier synchronization, which was collected at the step S1, in the data storage unit 104. FIG. 5 illustrates an example of data that is stored in the data storage unit 104. In the example in FIG. 5, in the case where there are four computation nodes, information that represents whether or not synchronization data has been transmitted, and a sequence number that represents the state of completion of the barrier synchronization are stored for each computation node. Moreover, based on the stored information, the collection unit 102 performs a convergence test, and stores a result of the convergence test in the data storage unit 104. The convergence test is a test that determines whether or not the state has reached a state in which the barrier synchronization will proceed no further (in other words, whether the barrier synchronization has converged). In the case of "OR:1" and "MAX-MIN:0", it is determined that the barrier synchronization has converged. When any of the computation nodes represents R(1), "OR:1" is set, and when all of the computation nodes represent B(0), "OR:0" is designated. "MAX-MIN" is the difference between the maximum value and the minimum value of the sequence numbers. In the example in FIG. 5, the data represents "OR: 0" and "MAX-MIN:0", so it is determined that the barrier synchronization has not converged.

For example, when data such as illustrated in FIG. 6 is stored in the data storage unit 104, it is determined that the barrier synchronization has converged. In the example in FIG. 6, the transmission states in all of the computation nodes represent R(1), so the synchronization data for the second barrier synchronization has not yet been transmitted. Moreover, the sequence number is "1" for all of the computationnodes, so the first barrier synchronization is completed.

After the processing at the step S1 is first executed, the collection unit 102 collects information concerning the state of progress of the barrier synchronization, periodically, for example, and updates the data storage unit 104, until the barrier synchronization converges.

Returning to the explanation in FIG. 4, the determination unit 103 identifies, from the memory 12, the stop position of the program for the first job in the computation node 1 (step S3).

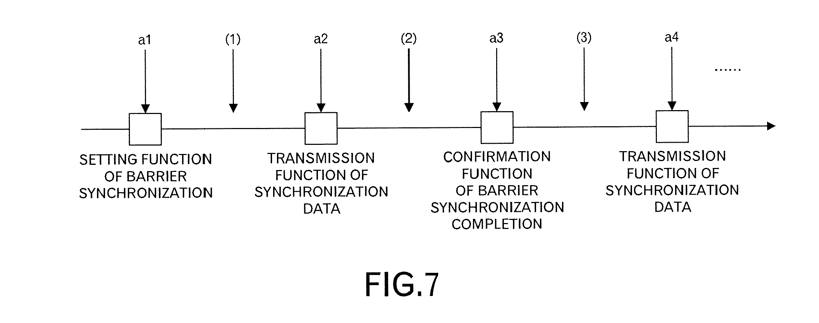

Functions that are called from inside the MPI_Barrier function and that are included in a communication library in a lower level than MPI will be explained using FIG. 7. In this embodiment, a setting function of the barrier synchronization, transmission function of the synchronization data, and completion confirmation function of the barrier synchronization are called from inside the MPI_Barrier function. In FIG. 7, the program proceeds going toward the right, where the setting function of the barrier synchronization, transmission function of the synchronization data and barrier synchronization completion confirmation function are called by the first MPI_Barrier function, and the transmission function of the synchronization data is called by the second MPI_Barrier function. The setting function of the barrier synchronization is not called by the second MPI_Barrier function because a setting of the barrier synchronization is the same as in the first MPI_Barrier function and the setting function of the barrier synchronization does not need to be called.

In this embodiment, the barrier synchronization is considered to be executing while the MPI_Barrier function is called. When the stop position of the program for the job is inside the MPI_Barrier function, the position where the program for the job was stopped is specifically identified at step S3 (for example, a1, (1), a2, (2), a3 or the like).

Returning to the explanation of FIG. 4, the determination unit 103 determines whether or not the stop position of the program for the first job represents that the computation node 1 has already finished transmitting synchronization data (step S5). In the example in FIG. 7, when the stop position is after (1), transmission of synchronization data is finished. When the stop position of the program for the first job is a2, the transmission function of the synchronization data cannot be ended while the transmission function is inprogress, so transmission of synchronization data is considered to be finished.

When the transmission of the synchronization data is not finished (step S5: NO route), the determination unit 103 references a field of the convergence test in the data storage unit 104 to determine whether the barrier synchronization has converged (step S7). At the step S7, when a circle mark is set in the field of the convergence test, the determination unit 103 determines that the barrier synchronization has converged, and when "X" is set in the field of the convergence test, the determination unit 103 determines that the barrier synchronization has not converged.

When the barrier synchronization has not converged (step S7: NO route), the determination unit 103 retries determination until it can be determined by updating the data storage unit 104 by the collection unit 102 that the barrier synchronization has converged.

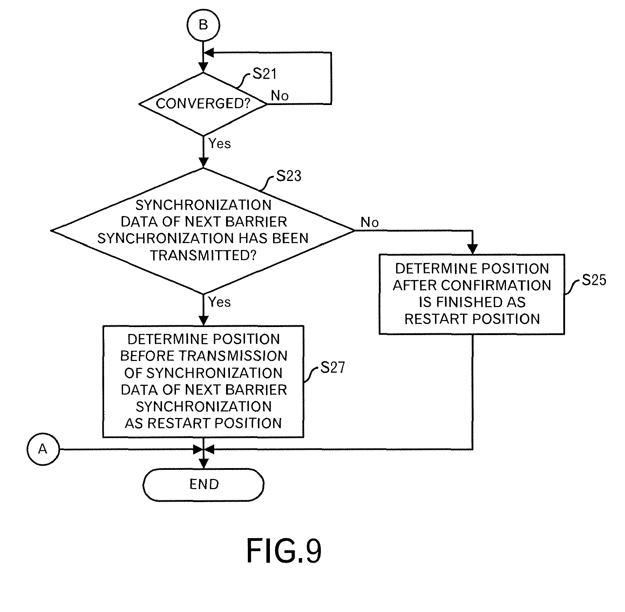

When the barrier synchronization has converged (step S7: YES route), in order to send synchronization data, the determination unit 103 sets the position before synchronization data transmission as the restart position (step S9). The determination unit 103 stores information representing the restart position in the memory 12. The processing then moves to FIG. 9 via terminal A, and ends. The position before the transmission of synchronization data is, for example, (1) in FIG. 7.

On the other hand, when the transmission of the synchronization data has finished (step S5: YES route), the determination unit 103 determines whether the stop position of the program for the first job represents that the computation node 1 has already finished confirming that the barrier synchronization is complete (step S11). In the case of the example in FIG. 7, when the stop position is after (2), confirmation that the barrier synchronization is complete is finished. When the stop position of the program for the first job is a3, the completion confirmation function of the barrier synchronization cannot be ended while the confirmation function is in progress. Therefore, it is considered that it has been confirmed that the barrier synchronization is complete.

When it is confirmed that the barrier synchronization is not complete (step S11: NO route), the determination unit 103 references the field of the convergence test in the data storage unit 104, and determines whether or not the barrier synchronization has converged (step S13). At the step S13, when a circle mark is set in the field of the convergence test, the determination unit 103 determines that the barrier synchronization has converged, and when "X" is set in the field of the convergence test, the determination unit 103 determines that the barrier synchronization has not converged.

When the barrier synchronization has not converged (step S13 : NO route), the determination unit 103 retries determination until it can be determined by updating the data storage unit 104 by the collection unit 102 that the barrier synchronization has converged.

When the barrier synchronization has converged (step S13: YES route), the determination unit 103 determines whether the barrier synchronization is complete (step S15). At the step S15, the determination unit 103 performs determination for its own computation node (here, the computation node 1) by referencing information that represents whether or not synchronization data has been transmitted, and is stored in the data storage unit 104. It is determined at the step S5 that the synchronization data has been transmitted, so when the data is R(1), it can be considered that the barrier synchronization is complete, and when the data is B(0), it can be considered that it is in the waiting state for the completion of the barrier synchronization (in other words, the barrier synchronization is not complete).

When the barrier synchronization is complete (step S15: YES route), in order to confirm the completion of the barrier synchronization, the determination unit 103 sets a position before the confirmation of the barrier synchronization completion as the restart position (step S17). The determination unit 103 stores information that represents the restart position in the memory 12. Processing then moves to FIG. 9 via the terminal A, and ends. The position before the confirmation of the barrier synchronization completion is (2) in the example in FIG. 7.

On the other hand, when the barrier synchronization is not complete (step S15: NO route), in order to resend the synchronization data, the determination unit 103 sets a position before the transmission of the synchronization data as the restart position (step S19). The determination unit 103 stores information representing the restart position in the memory 12. Processing then moves to FIG. 9 via the terminal A, and ends. The position before the transmission of the synchronization data is (1) in the example in FIG. 7.

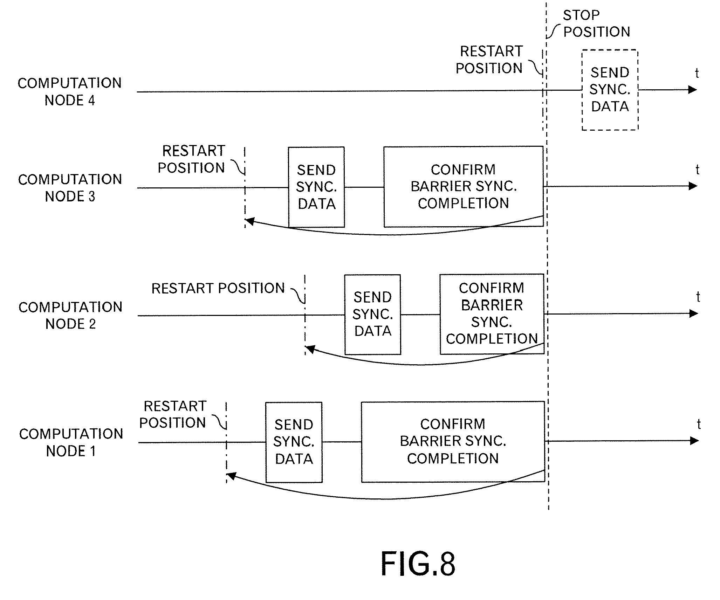

FIG. 8 illustrates an example of a case in which the restart position is set by the processing at the step S19. In FIG. 8, the axis is the time axis, and the barrier synchronization proceeds over time. The computation nodes 1 to 3 confirm that the barrier synchronization was completed after synchronization data was transmitted, however, the computation node 4 has not transmitted synchronization data (therefore, the block that represents the transmission of the synchronization data by the computation node 4 is depicted by a dotted line). Therefore, in the computation nodes 1 to 4, the barrier synchronization is not complete, so for the computation nodes 1 to 4, the position before the transmission of synchronization data is set by the processing at the step S19 as the restart position.

Returning to the explanation of FIG. 4, when the completion of the barrier synchronization has been confirmed (step S11: YES route), the processing moves to step S21 in FIG. 9 via terminal B.

Moving to an explanation of FIG. 9, thedeterminationunit 103 references the field of the convergence test in the data storage unit 104 and determines whether or not the barrier synchronization has converged (step S21). At the step S21, when a circle mark is set in the field of the convergence test, the determination unit 103 determines that the barrier synchronization has converged, and when "X" is set in the field of the convergence test, the determination unit 103 determines that the barrier synchronization has not converged.

When the barrier synchronization has not converged (step S21: NO route), the determination unit 103 retries determination until it can be determined by updating the data storage unit 104 by the collection unit 102 that the barrier synchronization has converged.

When the barrier synchronization has converged (step S21: YES route), the determination unit 103 determines whether the stop position of the program for the first job represents that the computation node 1 has already finished transmitting synchronization data for the next barrier synchronization (step S23). In the example in FIG. 7, when the stop position of the program for the first job is after a4, synchronization data for the next barrier synchronization has been transmitted. When the stop position of the program for the first job is a4, the transmission function of the synchronization data cannot be ended while the transmission function is in progress, so the transmission of the synchronization data for the next barrier synchronization is considered to be finished.

When synchronization data for the next barrier synchronization has been transmitted (step S23: YES route), the determination unit 103 sets a position before the transmission of synchronization data for the next barrier synchronization as the restart position (step S27). The determination unit 103 stores information that represents the restart position in the memory 12. Processing then ends. The position before transmission of the synchronization data for the next barrier synchronization is (3) in the example in FIG. 7.

On the other hand, when synchronization data for the next barrier synchronization has not been transmitted (step S23: NO route), the determination unit 103 sets a position after where confirmation of barrier synchronization completion was finished as the restart position (step S25). The determination unit 103 stores information that represents the restart position in the memory 12. Processing then ends. The position after where the confirmation of the barrier synchronization completion was finished is (3) in the example in FIG. 7.

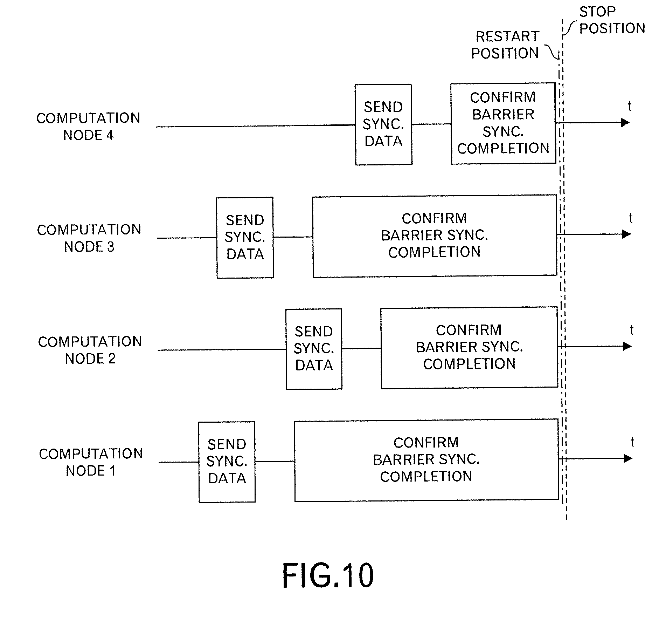

FIG. 10 illustrates an example when the restart position is set by the processing at the step S25. The axis in FIG. 10 is the time axis, and the barrier synchronization proceeds over time. The computation nodes 1 to 4 confirm that the barrier synchronization is complete after the synchronization data has been transmitted. Therefore, the next barrier synchronization is suitably performed even when the stop position of the program for the job is set as the restart position.

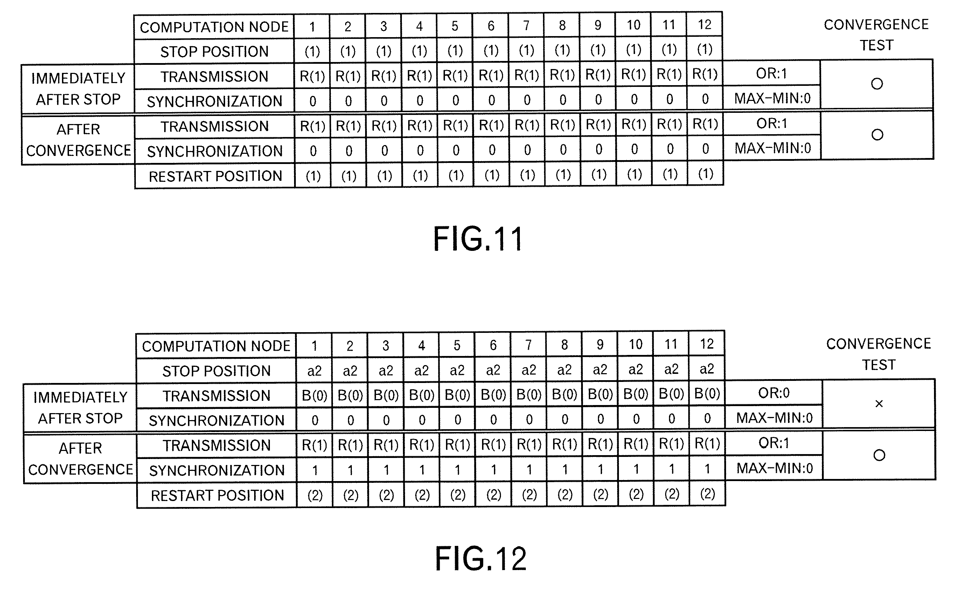

The relationship between the stop position and restart position of the program for the job will be explained using FIG. 11 to FIG. 16. FIG. 11 to FIG. 16 represent an example of a case in which there are twelve computation nodes, and for each computation node, the stop position, information concerning the state of progress of the barrier synchronization immediately after the stop, information concerning the state of progress of the barrier synchronization after convergence, and the restart position. Moreover, FIG. 11 to FIG. 16 illustrates the results of convergence test immediately after stopping and after convergence. The stop position and restart position are as in the example in FIG. 7.

In the example in FIG. 11, the stop position for all of the computation nodes is (1), and synchronization data has not been transmitted. Therefore, even when the stop positions are set as the restart positions, all of the nodes transmit synchronization data after restarting, so the barrier synchronization is adequately performed. In this case, the restart positions for the computation nodes 1 to 12 are set by the processing at the step S9.

In the example in FIG. 12, because the stop position for all of the computation nodes is a2, the barrier synchronization is not completed at any of the computation nodes after the convergence. Therefore, by setting the stop positions as the restart positions as it is, completion of the barrier synchronization is confirmed for all nodes after restarting, so the barrier synchronization is complete at all nodes. In this case, the restart positions for the computation nodes 1 to 12 are set by the processing at the step S17.

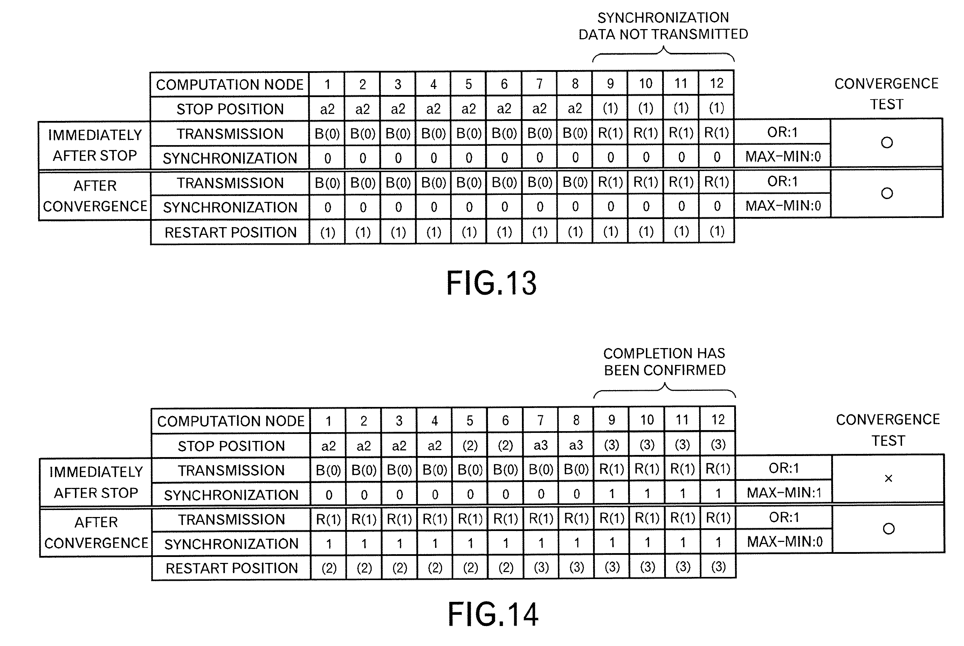

In the example in FIG. 13, the stop positions for the computation nodes 1 to 8 are a2, and the stop positions for the computation nodes 9 to 12 are (1). In other words, there are both computation nodes for which transmission of synchronization data is finished, and computation nodes for which transmission is not finished, so when the stop positions are set as the restart positions, the barrier synchronization is not complete at any of the computation nodes. Therefore, (1) is set as the restart positions for all of the computation nodes, and even for the computation nodes 1 to 8 for which transmission of synchronization data is finished, transmission of synchronization data is performed again. In this case, the restart positions are set at the step S19 for the computation nodes 1 to 8, and the restart positions are set by the processing at the step S9 for the computation nodes 9 to 12.

In the example in FIG. 14, the stop positions for the computation nodes 1 to 4 are a2, the stop positions for the computation nodes 5 and 6 are (2), the stop positions for the computation nodes 7 and 8 are a3, and the stop positions for the computation nodes 9 to 12 are (3). Therefore, the transmission of the synchronization data is finished for the computation nodes 1 to 6, so by restarting at (2), which is a position before confirmation of the completion of the barrier synchronization, the barrier synchronization is complete. Moreover, the computation nodes 7 to 12 finished the confirmation of the completion of the barrier synchronization, so restarting is performed from (3), which is a position after the completion of the barrier synchronization. In such a case, the restart positions for the computation nodes 1 to 6 are set by the processing at the step S17, and the restart positions for the computation nodes 7 to 12 are set by the processing at the step S25.

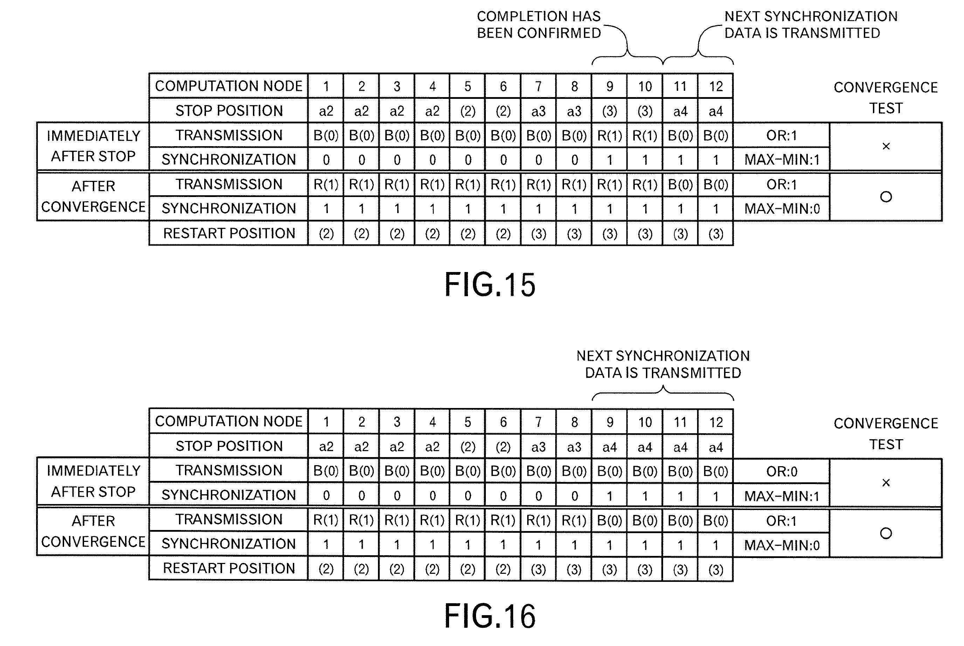

In the example in FIG. 15, the stop positions for the computation nodes 1 to 4 are a2, the stop positions for the computation nodes 5 and 6 are (2), the stop positions for the computationnodes 7 and 8 are a3, the stop positions for the computation nodes 9 and 10 are (3), and the stop positions for the computation nodes 11 and 12 are a4. Therefore, because the computation nodes 1 to 6 has transmitted synchronization data, the barrier synchronization is completed by restarting from (2), which is a position before the confirmation of the completion of the barrier synchronization. Moreover, Because the computation nodes 7 to 10 has confirmed that the barrier synchronization has been complete, restarting is performed from (3), which is a position after the confirmation of the completion of the barrier synchronization. As for the computation nodes 11 and 12, because the computation nodes 1 to 10 have not transmitted synchronization data for the next barrier synchronization and the next barrier synchronization is not complete, the restart position is (3), which is a position before transmission of the next synchronization data. In such a case, the restart positions for the computation nodes 1 to 6 are set by the processing at the step S17, the restart positions for the computation nodes 7 to 10 are set by the processing at the step S25, and the restart positions for the computation nodes 11 to 12 are set by the processing at the step S27.

In the example in FIG. 16, the stop positions for the computation nodes 1 to 4 are a2, the stop positions for the computation nodes 5 and 6 are (2), the stop positions for the computation nodes 7 and 8 are a3, and the stop positions for the computation nodes 9 to 12 are a4. Therefore, because the computation nodes 1 to 6 has transmitted synchronization data, the barrier synchronization is completed, by restarting from (2), which is a position before the confirmation of the completion of the barrier synchronization. Moreover, because the computation nodes 7 and 8 has confirmed the completion of the barrier synchronization, the restarting is performed from (3), which is a position after the confirmation of the completion of the barrier synchronization. Furthermore, because the computation nodes 1 to 8 have not transmitted synchronization data for the next barrier synchronization, and the next barrier synchronization is not complete, (3) is set as the restart position, which is a position before the next synchronization data is transmitted, for the computation nodes 9 to 12. In such a case, the restart positions for the computation nodes 1 to 6 are set by the processing at the step S17, the restart positions for the computation nodes 7 and 8 are set by the processing at the step S25, and the restart positions for the computation nodes 9 to 12 are set by the processing at the step S27.

By executing the processing such as described above, it is possible to restart execution of the program for the job so that the barrier synchronization is suitably performed even though a job is stopped during the execution of the barrier synchronization.

After the processing described above has been executed, the synchronization manager 101 saves information, that is used when executing the program for the first job again and that is stored in a storage device such as memory in the barrier interface 13, in a storage device such as a hard disk. Here, the resource manager 106 releases resources such as memory and other hardware in the barrier interface 13 and network interface 14.

Then, by activating the program for the second job by the job manager 105, the second job is executed in the computation node 1. When the execution of the second job is completed, the synchronization manager 101 returns the information that was saved in order to re-execute the first job to the original state (in other words, swaps-in the information). The job manager 105 then identifies, from the memory 12, information that represents the restart position. The job manager 105 also activates the program for the first job, and re-executes the first job in the computation node 1 from the determined restart position. Also in the computation nodes 2 to N, as in the case of the computation node 1, the second job is executed after the first job is stopped, and then after the execution of the second job is completed, the execution of the first job is restarted.

Although the embodiment of this invention is explained, this invention is not limited to the embodiment. For example, the functional block diagram of the aforementioned computation nodes 1 to N may not always correspond to a program module configuration.

Moreover, the aforementioned structure of each table is a mere example, and may be changed. Furthermore, as for the processing flow, as long as the processing result does not change, the turn of the steps may be exchanged. Furthermore, plural steps may be executed in parallel.

Moreover, in the aforementioned example, an example was explained in which the barrier interface is used for the mechanism for executing the barrier synchronization. However, without the barrier interface, a similar function may be provided in the firmware in the network switch.

The aforementioned embodiment of this invention is outlined as follows:
A control method relating to the embodiment is executed by a first node among plural nodes (CPUs or CPU cores) included in a parallel computer. Then, the control method includes: (A) upon detecting that execution of a program for a job is stopped in each of the plural nodes, collecting information concerning a state of progress of barrier synchronization from each of the plural nodes; and (B) first determining a restart position of the program for the job in the first node, based on a stop position of the program for the job in the first node and the information collected from each of the plural nodes.

With this configuration, even when the job is stopped during execution of the barrier synchronization, it is possible to restart the execution of the program for the job so as to appropriately perform the barrier synchronization.

Moreover, the aforementioned first determining may include: (b1) second determining, based on the information collected from each of the plural nodes, whether or not a state of the parallel computer reached a state that the barrier synchronization does not advance any more; and (b2) upon determining that the state of the parallel computer reached the state that the barrier synchronization does not advance any more, third determining the restart position of the program for the job.

Immediately after the stop of the program for the job, the barrier synchronization may advance by the synchronization data transmitted before the stop of the program for the job. Therefore, by performing the aforementioned processing, it is possible to prevent from determining an inappropriate restart position.

Moreover, the second determining may include: (b1-1) determining whether or not at least one of the plural nodes has not finished transmitting synchronization data for the barrier synchronization and whether the barrier synchronization has been completed in each of the plural nodes or has not been completed in any one of the plural nodes. When it is determined that the aforementioned conditions are satisfied, it is determined that the state of the parallel computer reached the state that the barrier synchronization advances no further, in other words, it is considered that the state of progress of the barrier synchronization does not change any more.

Moreover, the aforementioned first determining may include: upon detecting that the first node has finished transmitting synchronization data for the barrier synchronization and the first node waits for receipt of the synchronization data from nodes other than the first node, setting, as a restart position, a position before a position that the synchronization data was transmitted. In such a case, because the nodes other than the first node do not transmit the synchronization data, the barrier synchronization is not completed. Then, by restarting the execution of the program for the job at the position that the synchronization data was transmitted, the barrier synchronization can be performed, appropriately.

In addition, the first determining may include: upon detecting that the barrier synchronization has been completed in the first node and the first node has finished transmitting synchronization data for next barrier synchronization, setting, as a restart position, a position before a position that the synchronization data for the next barrier synchronization was transmitted. In such a case, there may be a node that has not transmitted the synchronization data for the next barrier synchronization. Therefore, the next barrier synchronization may not be completed. Then, by restarting the execution of the program for the job at the position before the synchronization data for the next barrier synchronization was transmitted, the next barrier synchronization is appropriately transmitted.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. In addition, the intermediate processing result is temporarily stored in a storage device such as a main memory or the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A control method, comprising:
upon detecting that execution of a program for a job is stopped in each of a plurality of nodes, collecting, by using one node among the plurality of nodes, information concerning a state of progress of barrier synchronization from each of the plurality of nodes; and
first determining, by using the one node, a restart position of the program for the job in the one node, based on a stop position of the program for the job in the one node and the information collected from each of the plurality of nodes.

2. The control method as set forth in claim 1, wherein the first determining comprises:
second determining, based on the information collected from each of the plurality of nodes, whether or not a state of the parallel computer reached a state that the barrier synchronization advances no further; and
upon determining that the state of the parallel computer reached the state that the barrier synchronization advances no further, third determining the restart position of the program.

3. The control method as set forth in claim 2, wherein the second determining comprises:
determining whether or not at least one of the plurality of nodes has not finished transmitting synchronization data for the barrier synchronization and whether the barrier synchronization has been completed in each of the plurality of nodes or has not been completed in any one of the plurality of nodes.

4. The control method as set forth in any of claims 1 to 3, wherein the first determining comprises:
upon detecting that the one node has finished transmitting synchronization data for the barrier synchronization and the one node waits for receipt of the synchronization data from nodes other than the one node, setting, as a restart position, a position before a position that the synchronization data was transmitted.

5. The control method as set forth in any of claims 1 to 4, wherein the first determining comprises:
upon detecting that the barrier synchronization has been completed in the one node and the one node has finished transmitting synchronization data for next barrier synchronization, setting, as a restart position, a position before a position that the synchronization data for the next barrier synchronization was transmitted.

6. The control method as set forth in any of claims 1 to 5, wherein each of the plurality of nodes includes a processor or processing unit for executing a computational processing.

7. A program for causing the one node to execute the control method as set forth in any one of claims 1 to 6.

8. A parallel computer, comprising:
a plurality of nodes, and
wherein one node of the plurality of nodes, collecting information concerning a state of progress of barrier synchronization from each of the plurality of nodes, upon detecting that execution of a program for a job is stopped in each of the plurality of nodes, and
determines a restart position of the program for the job in the one node, based on a stop position of the program for the job in the one node and the information collected from each of the plurality of nodes.
